(19) Europäisches Patentamt
European Patent Office
Office européen des brevets

(11) Numéro de publication : **0 223 687**
**B1**

# (12) FASCICULE DE BREVET EUROPÉEN

(45) Date de publication du fascicule du brevet : **30.08.89**

(51) Int. Cl.[4] : **C 22 B 59/00**, C 01 F 17/00

(21) Numéro de dépôt : **86402445.0**

(22) Date de dépôt : **31.10.86**

## (54) Perfectionnement à un procédé de production d'hydroxydes de terres rares par traitement de minerais contenant des phosphates de terres rares.

(30) Priorité : **08.11.85 FR 8516542**

(43) Date de publication de la demande :
**27.05.87 Bulletin 87/22**

(45) Mention de la délivrance du brevet :
**30.08.89 Bulletin 89/35**

(84) Etats contractants désignés :
**AT BE CH DE ES FR GB GR IT LI LU NL SE**

(56) Documents cités :
**BE–A– 415 882**
**GB–A– 2 084 556**
**US–A– 2 811 411**
**CHEMICAL ABSTRACTS, vol. 92, no. 18, mai 1980, page 153, résumé no. 149341u, Columbus, Ohio, US**

(73) Titulaire : **RHONE-POULENC CHIMIE**
**25, quai Paul Doumer**
**F-92408 Courbevoie Cédex (FR)**

(72) Inventeur : **Fabre, Frédéric**
**Appartement 106 10, rue Louis Blanc**
**F-75010 - Paris (FR)**
Inventeur : **Lambert, André**
**15, rue de la Corvette Les Marines de Puiseux**
**F-95380 - Louvres (FR)**
Inventeur : **Tognet, Jean-Paul**
**2, allée du Mail**
**F-17000 - La Rochelle (FR)**

(74) Mandataire : **Dutruc-Rosset, Marie-Claude et al**
**RHONE-POULENC INTERSERVICES Service Brevets Chimie 25, Quai Paul Doumer**
**F-92408 Courbevoie Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 223 687 B1

Jouve, 18, rue St-Denis, 75001 Paris, France

**Description**

La présente invention concerne le traitement de minerais contenant des phosphates de terres rares tels que la monazite ou le xénotime.

Elle concerne plus particulièrement un procédé de production d'hydroxydes de terres rares par traitement de minerais contenant des phosphates de terres rares. L'invention vise également toute autre source de phosphates de terres rares.

Les procédés industriels de production d'hydroxydes de terres rares par traitement de minerais contenant des phosphates de terres rares consistent généralement à effectuer un broyage très poussé à sec ou dans l'eau, à traiter le minerai broyé par une solution aqueuse concentrée d'hydroxyde de sodium à température élevée, et à séparer à chaud, après dilution, une phase solide constituée par les hydroxydes de terres rares et une phase liquide constituée par une solution aqueuse concentrée comprenant essentiellement de l'hydroxyde de sodium et du phosphate de sodium.

La phase liquide est éventuellement concentrée, puis l'on provoque la cristallisation du phosphate de sodium $Na_3PO_4 \cdot 10H_2O$.

Les cristaux de phosphate de sodium sont alors séparés et l'on récupère une solution relativement riche en hydroxyde de sodium que l'on dénommera eaux-mères de cristallisation..

Cette solution contient par exemple :

| | |
|---|---|
| — hydroxyde de sodium 3 à 6 N soit | 120 à 240 g/l |
| — $P_2O_5$ | 1 à 10 g/l |
| — $SiO_2$ | 3 à 6 g/l |

On a déjà proposé de recycler cette solution pour l'attaque du minerai, éventuellement après concentration. Toutefois, la silice (sous forme de silicate) tend à s'accumuler lors du recyclage (US-A-2 815 264). C'est pourquoi il est préconisé de recycler qu'environ la moitié de la solution récupérée après séparation du phosphate de sodium.

La Demanderesse a mis en évidence que l'inconvénient majeur de l'accumulation de la silice par suite du recyclage était la diminution du rendement en hydroxydes de terres rares. Il convenait donc de rechercher des moyens pour éliminer la silice de la solution récupérée.

La Demanderesse a découvert que la silice pouvait être éliminée de la solution récupérée par traitement de cette solution par un oxyde ou un hydroxyde de métal alcalino-terreux, et notamment de la chaux, et séparation du précipité formé.

On a déjà proposé, dans un procédé de traitement de la monazite, de traiter une phase liquide par la chaux (G.A. Meerson et Li Man Khek, Russ. Met. 1965, p. 22 et GB-A-2 084 556). Il s'agit toutefois, dans ce procédé du traitement de la solution directement séparée des hydroxydes de terres rares, c'est-à-dire d'une solution contenant du phosphate de sodium et de l'hydroxyde de sodium. Dans ce procédé, on transforme la totalité du phosphate de sodium en phosphate de calcium qui précipite. Ces documents ne suggèrent pas un traitement après séparation du phosphate de sodium ni ne soulèvent le problème posé par l'accumulation de la silice.

La présente invention a pour objet un procédé de production d'hydroxydes de lanthanides et d'yttrium par traitement d'un minerai contenant des phosphates de lanthanides et d'yttrium par une solution aqueuse d'hydroxyde de métal alcalin, séparation d'une phase solide constituée par les hydroxydes de lanthanides et d'yttrium et d'une phase liquide comprenant essentiellement le phosphate de métal alcalin et l'hydroxyde de métal alcalin, cristallisation à partir de cette phase liquide du phosphate de métal alcalin qui est ensuite séparée de ses eaux-mères de cristallisation comprenant essentiellement l'hydroxyde de métal alcalin puis recyclage de celles-ci, éventuellement après concentration, dans le traitement du minerai, ce procédé étant caractérisé en ce que, avant recyclage, on ajoute aux eaux-mères de cristallisation du phosphate de métal alcalin récupérées après séparation dudit phosphate, un oxyde ou un hydroxyde de calcium et l'on sépare le précipité formé de la solution qui est ensuite recyclée.

Ce procédé permet un recyclage total de l'hydroxyde de métal alcalin présent dans la solution récupérée après séparation du phosphate de métal alcalin contrairement à la technique antérieure où seulement environ la moitié de l'hydroxyde de métal alcalin pouvait être recyclée. Ce recyclage ne conduit à aucune baisse du rendement d'attaque des phosphates de terres rares.

Ce traitement permet non seulement d'éliminer la silice, mais également la totalité du phosphate encore présent en solution, c'est-à-dire le phosphate qui n'a pas cristallisé au stade de cristallisation, ainsi que d'autres impuretés dont l'alumine (sous forme d'aluminate) par exemple.

Les minerais de terres rares intervenant dans le procédé de l'invention sont tous les minerais de type phosphates contenant des terres rares notamment la monazite et le xénotime. Toutefois, on peut également traiter tout résidu synthétique contenant des phosphates de terres rares.

On entend par terres rares, selon l'invention, les éléments de la classification périodique dont le numéro atomique va de 57 à 71 et l'yttrium ayant le numéro atomique 39. Les minerais de terres rares traités selon le procédé de l'invention peuvent contenir ces éléments selon des teneurs extrêmement variables.

Les minerais de terres rares mis en œuvre dans le procédé selon l'invention sont de préférence des minerais au moins grossièrement broyés. Mais il peut également s'agir de minerais non broyés si la taille des particules est suffisamment fine. Le broyage peut être effectué de manière classique à sec ou dans l'eau.

Le minerai ainsi broyé est ensuite traité à chaud par une solution aqueuse concentrée d'hydroxyde de métal alcalin conduisant à une pulpe.

L'hydroxyde de métal alcalin peut être l'hydroxyde de sodium, l'hydroxyde de potassium ou leur mélange. C'est de préférence l'hydroxyde de sodium. Il est mis en œuvre sous forme de solution aqueuse concentrée ayant une concentration variant entre 30 et 70 % en poids. D'une manière préférentielle, on fait appel à une solution contenant de 45 à 50 % en poids d'hydroxyde de métal alcalin.

L'attaque nécessite un gros excès d'hydroxyde de métal alcalin. On met généralement en œuvre de 1,5 à 3 fois la stoechiométrie selon les minerais et les modalités d'attaque.

Les conditions de traitement peuvent être les conditions des procédés connus. Ainsi la température peut varier de 100 à 220 °C, de préférence de 130 à 180 °C et la pression peut varier de la pression atmosphérique à $3.10^6$ Pa. La durée qui est fonction de la température et de la pression peut varier de 1 à 10 heures. En outre une agitation énergique du milieu réactionnel est nécessaire au cours de cette étape d'attaque.

Après cette attaque, la pulpe est diluée à l'eau par exemple jusqu'à environ de 5 à 25 % en hydroxyde de métal alcalin et l'on sépare le précipité d'hydroxydes de terres rares selon les techniques connues de filtration, décantation, essorage ou centrifugation.

La phase liquide recueillie est essentiellement constituée par le phosphate de métal alcalin et l'hydroxyde de métal alcalin.

A partir de ladite phase éventuellement concentrée, on provoque la cristallisation du phosphate de métal alcalin, par exemple, par refroidissement jusqu'à une température comprise le plus souvent, entre 15 et 35 °C et l'on sépare d'une manière classique, les cristaux de phosphate de métal alcalin.

On récupère les eaux-mères de cristallisation du phosphate de métal alcalin qui comprennent l'hydroxyde de métal alcalin et les impuretés à éliminer. Elles contiennent donc essentiellement l'hydroxyde de métal alcalin dont la concentration varie entre 1 et 8 N, de préférence entre 3 et 6 N.

Selon le perfectionnement apporté par la présente invention, on traite les eaux-mères de cristallisation par un oxyde ou un hydroxyde de calcium.

L'oxyde ou l'hydroxyde de calcium sont communément désignés sous le nom de « chaux ».

Conformément à l'invention, on peut faire appel à la chaux, sous une forme plus ou moins finement broyée bien qu'une forme aqueuse ne soit pas exclue mais impose ensuite l'élimination de l'eau apportée.

L'oxyde ou l'hydroxyde de calcium est utilisé avantageusement dans un rapport stoechiométrique de 1 à 3, et de préférence de 1,5 à 2,5, notamment de 2 environ, ce rapport étant calculé par rapport aux ions $PO_4^{3-}$ et $SiO_3^{2-}$ sur la base des réactions :

$$2\ PO_4^{3-} + 3\ Ca^{2+} \rightleftarrows Ca_3(PO_4)_2$$

$$Sio_3^{2-} + Ca^{2+} \leftrightarrows CaSio_3$$

On introduit l'oxyde ou l'hydroxyde de calcium dans les eaux-mères dont la température n'est pas critique et peut varier de la température ambiante jusqu'à sa température d'ébullition mais elle est comprise, de préférence, entre 70 et 90 °C, notamment 80 °C environ.

L'addition de l'oxyde ou de l'hydroxyde de calcium peut être effectuée en continu ou en discontinu progressivement ou en une seule fois. A la fin de celle-ci, on maintient le milieu réactionnel sous agitation un certain temps avant l'opération de séparation.

La durée séparant l'addition de l'oxyde ou de l'hydroxyde de calcium et la séparation du précipité pour un procédé discontinu ou le temps de séjour pour un procédé continu, peut varier dans de larges limites, par exemple, de 10 minutes à 10 heures mais est avantageusement compris entre 1 et 3 heures.

Le précipité obtenu contenant les impuretés à éliminer (silicate, phosphate) est séparé du milieu réactionnel selon les techniques classiques de séparation liquide-solide : filtration, décantation, essorage et centrifugation.

La phase liquide est constituée par la solution d'hydroxyde alcalin qui est susceptible d'être recyclée lors du traitement de minerai.

Il est possible de concentrer si nécessaire ladite solution avant son recyclage.

Le procédé selon l'invention permet de recycler la solution d'hydroxyde alcalin sans que l'on constate une baisse du rendement en hydroxydes de terres rares.

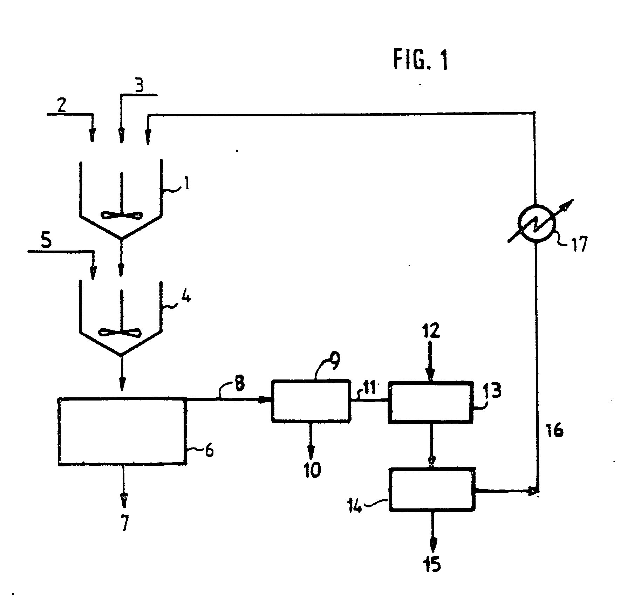

Pour une meilleure compréhension de l'invention, on a représenté sur la figure 1 annexée un mode de réalisation préférée de l'invention.

Dans un réacteur 1, sont ajoutés un minerai broyé 2 contenant des phosphates de terres rares ainsi que de la soude neuve 3.

Après réaction, le produit de réaction est dilué en 4 par apport d'eau 5.

Après cette dilution, on sépare le précipité d'hydroxydes de terres rares en 6.

On récupère les hydroxydes de terres rares en 7 et en 8 une phase liquide comprenant essentiellement le phosphate de sodium et de l'hydroxyde de sodium.

A partir de cette phase liquide, on sépare le phosphate de sodium par cristallisation en 9.

On récupère en 10, le phosphate de sodium et en 11 les eaux-mères de cristallisation du phosphate de sodium.

Selon l'invention, à ces eaux-mères on ajoute en 13 un oxyde ou un hydroxyde de calcium 12.

On sépare en 14 le précipité formé 15 de la solution 16. Cette solution peut être concentrée en 17 avant d'être recyclée dans le réacteur 1.

Les exemples suivants illustrent la présente invention.

Exemple 1

On traite 6 $m^3$ d'eaux-mères obtenues après cristallisation du phosphate de sodium. Les eaux-mères contiennent : (les impuretés étant exprimées en oxydes)

936 kg de NaOH libre (soit 156 g/l)
45 kg de $P_2O_5$
76 kg de NaOH liée sous forme de phosphate
19 kg de $SiO_2$ (soit 3,17 g/l)
5 kg de $Al_2O_3$

On ajoute à ces eaux-mères à 80 °C, 142 kg de chaux CaO (soit un rapport stoechiométrique de 2).

On laisse sous agitation pendant deux heures, puis on filtre et on lave le précipité à l'eau.

On obtient une solution aqueuse d'un volume de 5,8 $m^3$ contenant 1 000 kg de NaOH, 2,5 kg de $SiO_2$, 4 kg de $Al_2O_3$, et qui est dépourvue de phosphate.

Exemple 2

On effectue une série d'essais enchaînés simulant le procédé selon l'invention, avec traitement des eaux-mères de cristallisation du phosphate de sodium par la chaux à 80 °C pendant 2 heures. La chaux est introduite de façon que le rapport stoechiométrique soit voisin de 2. On constate que la concentration en $P_2O_5$, $Al_2O_3$, $SiO_2$ devient rapidement constante dans les eaux-mères de cristallisation au cours des différents essais enchaînés.

On a obtenu des rendements en hydroxydes de terres rares qui sont les suivants :

| Essai | 1* | 2 | 3 | 4 | 5 |
|---|---|---|---|---|---|
| Rendement | 96,7 | 96,4 | 97,5 | 96,9 | 96,5 |

* = premier essai sans recyclage

Ces résultats mettent en évidence la possibilité du recyclage total de l'hydroxyde de sodium après traitement par la chaux.

Exemple comparatif

On a procédé comme à l'exemple 2, mais sans effectuer de traitement. par la chaux. Les rendements en hydroxydes de terres rares sont les suivants :

| Essai | 1* | 2 | 3 | 4 | 5 |
|---|---|---|---|---|---|
| Rendement | 97,0 | 93,6 | 94,3 | 93,8 | 93,5 |

* = premier essai sans recyclage

Ces résultats mettent en évidence la perte de rendement liée au recyclage lorsqu'on n'effectue pas de traitement par la chaux.

## Revendications

1. Procédé de production d'hydroxydes de lanthanides et d'yttrium par traitement d'un minerai contenant des phosphates de lanthanides et d'yttrium par une solution aqueuse d'hydroxyde de métal

alcalin, séparation d'une phase solide constituée par les hydroxydes de lanthanides et d'yttrium et d'une phase liquide comprenant essentiellement le phosphate de métal alcalin et l'hydroxyde de métal alcalin, cristallisation à partir de cette phase liquide du phosphate de métal alcalin qui est ensuite séparée de ses eaux-mères de cristallisation comprenant essentiellement l'hydroxyde de métal alcalin puis recyclage de celles-ci, éventuellement après concentration, dans le traitement du minerai, ce procédé étant caractérisé en ce que, avant recyclage, on ajoute aux eaux-mères de cristallisation du phosphate de métal alcalin récupérées après séparation dudit phosphate, un oxyde ou un hydroxyde de calcium et l'on sépare le précipité formé de la solution qui est ensuite recyclée.

2. Procédé selon la revendication 1 caractérisé en ce que les eaux-mères de cristallisation contiennent essentiellement l'hydroxyde de métal alcalin dont la concentration varie entre 1 et 8 N.

3. Procédé selon la revendication 2 caractérisé en ce que la concentration dudit hydroxyde alcalin varie 3 et 6 N.

4. Procédé selon l'une des revendications 2 et 3 caractérisé par le fait que lesdites eaux-mères contiennent de 1 à 10 g/l de $P_2O_5$.

5. Procédé selon l'une des revendications 2 à 4 caractérisé par le fait que lesdites eaux-mères contiennent de 3 à 6 g/l de $SiO_2$.

6. Procédé selon l'une des revendications 1 à 5 caractérisé en ce que l'oxyde ou l'hydroxyde de calcium est utilisé dans un rapport stoechiométrique de 1 à 3 par rapport aux ions $PO_4^{3-}$ et $SiO_3^{2-}$.

7. Procédé selon la revendication 6 caractérisé en ce que ledit rapport stoechiométrique est de 1,5 à 2,5.

8. Procédé selon l'une des revendications 1 à 7 caractérisé en ce que l'addition de l'oxyde ou de l'hydroxyde de calcium est effectuée dans les eaux-mères dont la température peut varier de la température ambiante jusqu'à sa température d'ébullition.

9. Procédé selon la revendication 8 caractérisé en ce que ladite température peut varier entre 70 et 90 °C.

10. Procédé selon la revendication 9 caractérisé en ce que ladite température est d'environ 80 °C.

11. Procédé selon l'une des revendications 1 à 10 caractérisé en ce que la durée entre l'addition de l'oxyde ou de l'hydroxyde de calcium et la séparation du précipité ou le temps de séjour dans un procédé continu peut varier entre 10 minutes et 10 heures.

12. Procédé selon la revendication 11 caractérisé en ce que ladite durée ou le temps de séjour est compris entre 1 et 3 heures.

13. Procédé selon l'une des revendications 1 à 12 caractérisé en ce que l'on concentre ladite solution après séparation du précipité.

## Claims

1. A process for the production of hydroxides of lanthanides and yttrium by treatment of an ore containing phosphates of lanthanides and yttrium by an aqueous solution of alkali metal hydroxide, separation of a solid phase formed by the hydroxides of lanthanides and yttrium and a liquid phase essentially comprising alkali metal phosphate and alkali metal hydroxide, crystallisation from said liquid phase of the alkali metal phosphate which is then separated from its crystallisation mother liquors essentially comprising the alkali metal hydroxide and then recycling of said mother liquors, possibly after concentration, to the ore treatment step, the process being characterised in that, prior to recycling, a calcium oxide or hydroxide is added to the mother liquors of crystallisation of the alkali metal phosphate, which are recovered after separation of said phosphate, and the precipitate formed is separated from the solution which is then recycled.

2. A process according to claim 1 characterised in that the crystallisation mother liquors essentially contain the alkali metal hydroxide, the concentration of which varies between 1 and 8 N.

3. A process according to claim 2 characterised in that the concentration of said alkali metal hydroxide varies between 3 and 6 N.

4. A process according to one of claims 2 and 3 characterised in that said mother liquors contain from 1 to 10 g/l of $P_2O_5$.

5. A process according to one of claims 2 to 4 characterised in that said mother liquors contain from 3 to 6 g/l of $SiO_2$.

6. A process according to one of claims 1 to 5 characterised in that the calcium oxide or hydroxide is used in a stoichiometric ratio of from 1 to 3 with respect to the ions $PO_4^{3-}$ and $SiO_3^{2-}$.

7. A process according to claim 6 characterised in that said stoichiometric ratio is from 1.5 to 2.5.

8. A process according to one of claims 1 to 7 characterised in that the addition of the calcium oxide or hydroxide is effected in the mother liquors, the temperature of which may vary from ambient temperature to its boiling temperature.

9. A process according to claim 8 characterised in that said temperature may vary between 70 and 90 °C.

10. A process according to claim 9 characterised in that said temperature is about 80 °C.

11. A process according to one of claims 1 to 10 characterised in that the period between the

addition of the calcium oxide or hydroxide and separation of the precipitate or the residence time in a continuous process may vary between 10 minutes and 10 hours. .

12. A process according to claim 11 characterised in that said period or the residence time is between 1 and 3 hours.

13. A process according to one of claims 1 to 12 characterised by concentrating said solution after separation of the precipitate.

**Patentansprüche**

1. Verfahren zur Herstellung von Hydroxiden von Lanthaniden und Yttrium durch Behandlung eines Erzes, enthaltend Phosphate von Lanthaniden und Yttrium, mit einer wäßrigen Alkalihydroxidlösung, Abtrennung einer festen Phase bestehend aus den Hydroxiden der Lanthanide und des Yttriums und einer flüssigen Phase, enthaltend im wesentlichen das Alkaliphosphat und Alkalihydroxid, Kristallisation, dieser flüssingen Phase ausgehend von des Alkaliphosphats, das anschließend von seiner Kristallisationsmutterlauge, enthaltend im wesentlichen das Alkalihydroxid, abgetrennt wird, Rückführung dieser Mutterlauge, gegebenenfalls nach Einengung, zur Behandlung des Erzes, dadurch gekennzeichnet, daß man, vor der Rückführung, zu der Kristallisationsmutterlauge des Alkaliphosphates, die nach der Abtrennung des Phosphats zurückgewonnen worden ist, ein Oxid oder Hydroxid von Calcium zusetzt und den entstandenen Niederschlag von der Lösung abtrennt, die anschließend zurückgeführt wird.

2. Verfahren nach Anspruch 1, dadurch gekennzeichnet, daß die Mutterlauge der Kristallisation im wesentlichen das Alkalihydroxid in einer Konzentration zwischen 1 und 8 n enthält.

3. Verfahren nach Anspruch 2, dadurch gekennzeichnet, daß die Konzentration des Alkalihydroxids zwischen 3 und 6 n variiert.

4. Verfahren nach einem der Ansprüche 2 und 3, dadurch gekennzeichnet, daß die Mutterlauge 1 bis 10 g/l $P_2O_5$ enthält.

5. Verfahren nach einem der Ansprüche 2 bis 4, dadurch gekennzeichnet, daß die Mutterlauge 3 bis 6 g/l $SiO_2$ enthält.

6. Verfahren nach einem der Ansprüche 1 bis 5, dadurch gekennzeichnet, daß das Calciumoxid oder -hydroxid in einem stöchiometrischen Verhältnis von 1 bis 3, bezogen auf die $PO_4^{3-}$- und $SiO_3^{3-}$-Ionen angewandt wird.

7. Verfahren nach Anspruch 6, dadurch gekennzeichnet, daß das stöchiometrische Verhältnis 1,5 bis 2,5 beträgt.

8. Verfahren nach einem der Ansprüche 1 bis 7, dadurch gekennzeichnet, daß der Zusatz von Calciumoxid oder -hydroxid zu der Mutterlauge bei einer Temperatur durchgeführt wird, die von Raumtemperatur bis zur Siedetemperatur variieren kann.

9. Verfahren nach Anspruch 8, dadurch gekennzeichnet, daß die Temperatur zwischen 70 und 90 °C variieren kann.

10. Verfahren nach Anspruch 9, dadurch gekennzeichnet, daß die Temperatur etwa 80 °C beträgt.

11. Verfahren nach einem der Ansprüche 1 bis 10, dadurch gekennzeichnet, daß die Zeit zwischen der Zugabe des Calciumoxids oder -hydroxids und der Abtrennung des Niederschlags oder die Verweildauer bei einem kontinuierlichen Verfahren zwischen 10 min und 10 h variieren kann.

12. Verfahren nach Anspruch 11, dadurch gekennzeichnet, daß die Zeit oder die Verweildauer zwischen 1 und 3 h liegt.

13. Verfahren nach einem der Ansprüche 1 bis 12, dadurch gekennzeichnet, daß man die Lösung nach der Abtrennung des Niederschlags konzentriert.

FIG. 1